## Europäisches Patentamt
## European Patent Office
## Office européen des brevets

(11) Publication number: **0 172 567**
**B1**

# EUROPEAN PATENT SPECIFICATION

(45) Date of publication of patent specification: **07.11.90**

(51) Int. Cl.⁵: **C 09 D 7/12**

(21) Application number: **85110467.9**

(22) Date of filing: **20.08.85**

(54) Coating composition.

(30) Priority: **21.08.84 JP 172507/84**

(43) Date of publication of application:
**26.02.86 Bulletin 86/09**

(45) Publication of the grant of the patent:
**07.11.90 Bulletin 90/45**

(84) Designated Contracting States:
**DE FR GB NL**

(56) References cited:
**BE-A- 665 390**

**PATENTS ABSTRACTS OF JAPAN, vol. 10, no. 56 (C-331)2113r, 6th March 1986; & JP-A-60 199 076 (MITSUBISHI RAYON K.K.) 08-10-1985**

**CHEMICAL ABSTRACTS, vol. 103, no. 20, 18th November 1985, page 49, abstract no. 161518k, Columbus, Ohio, US; & JP-A-60 103 063 (EIDAI CO., LTD) 07-06-1985**

(73) Proprietor: **MITSUBISHI RAYON CO., LTD.**
**3-19, Kyobashi 2-chome Chuo-Ku**
**Tokyo 104 (JP)**

(72) Inventor: **Nakamoto, Hideo**
**1-9-403, Chiyodabashi 1-chome**
**Chigusa-ku Nagoya-shi Aichi-ken (JP)**
Inventor: **Okaya, Tsutomu**
**4-5-19, Ishiodai**
**Kasugai-shi Aichi-ken (JP)**

(74) Representative: **Bühling, Gerhard, Dipl.-Chem. et al**
**Patentanwaltsbüro Tiedtke-Bühling-Kinne Grupe-Pellmann-Grams-Struif Bavariaring 4 D-8000 München 2 (DE)**

(56) References cited:
**CHEMICAL ABSTRACTS, vol. 77, no. 26, 25th December 1972, page 66, abstract no. 165980x, Columbus, Ohio, US; & DE-A-2 206 698 (UNION CARBIDE CORP.) 31-08-1972**

**Description**

This invention concerns a coating composition with excellent abrasion resistance suitable to the surface coating of a substrate such as metals, fiber-reinforced plastics (hereinafter simply referred to as FRP) and other plastics.

As metals, FRP and other plastic materials have been used more and more in electric and electronic applications in recent years, an improvement is demanded for the surface durability of these substrate materials, i.e., for properties such as abrasion resistance and scratch resistance.

Various methods of surface treatment through abrasion-resistant coating have been proposed for improving the durability of metal materials and wooden floor materials, for instance, by using coating compositions as described below:

(1) a composition comprising from 0.5 to 30% by weight of mineral substances mainly composed of aluminium oxide and from 1 to 50% by weight of fibrous substances incoporated through dispersion to an acid curing type amino alkyd resin or moisture-curing type polyurethane resin solid (Japanese Patent Publication No. 35487/1976),

(2) a composition comprising from 5 to 7.5 parts by weight of α-alumina and from 2.5 to 5.0 parts by weight of silicon carbide blended with 100 parts by weight of a urethane resin (Japanese Patent Publication No. 33475/1980), or

(3) a coating composition comprising highly hard ceramics incorporated and dispersed into an abrasion-resistant thermoplastic resin (Japanese Patent Laid-Open No. 4930/1979).

However, any of the compositions (1) and (2) is used for improving the durability of floor materials, and it is difficult to provide a high surface durability demanded for metal, FRP or plastics in electric and electronic applications. In addition, the compositions have only an insufficient adherence to these materials. Further, the abrasion-resistant thermoplastic resin in the above composition (3), for example, polyamide, polyacetal or Teflon® has an insufficient adhesion property for metal, FRP, plastics and cannot provide a surface coating treatment of high abrasion resistance and scratch resistance.

JP—A—59-54448, an earlier application, describes a coating composition containing spherical α-alumina particles having an average particle size of from 5 to 50 μm incorporated in a binder such as epoxy resins, urethane resins, silicone resins and fluorinated resins.

From Chemical Abstracts, vol. 103, No. 20, p. 49, abstract No. 161518k, Columbus, Ohio, U.S.A., shaped parts are known which contain inorganic particles having a large particle size (mullite beads; 400—600 μm); inorganic particles having a small particle size (α-alumina; 50—80 μm); and a synthetic resin binder (epoxy resin).

From Chemical Abstracts, vol. 77, No. 26, p. 66, abstract No. 165980x, Columbus, Ohio, U.S.A., abrasion-resistant coatings for metal and plastics are known which contain abrasion-resistant particles such as alumina particles incorporated in a binder selected from thermoplastic resins, thermosetting resins, rubbers, ceramics, glass and metals.

It is the object of this invention to provide a coating composition according to the preamble of claim 1 which composition is capable to form a coating film on a substrate such as metal, FRP or plastics which ensures an excellent abrasion resistance and scratch resistance resulting in a high surface durability and which ensures an excellent adherence, smoothness and chemical resistance.

This object is solved by a coating composition excellent in abrasion resistance comprising spherical α-alumina particles, a binder and an organic solvent, in which said spherical α-alumina particles have an average particle size within a range between 5 and 50 μm, characterized in that the spherical α-alumina particles are contained in an amount of from 35 to 85% by weight of the solid content in the coating composition and the binder comprises a bisphenol A type epoxy resin having an epoxy equivalent of 450 or more and a curing agent or an acrylic resin having a glass transition temperature of 30°C or higher and a hydroxyl value of from 20 to 120 and a curing agent.

Detailed description of the invention

There are no particular restrictions for the starting material and the production process of the spherical α-alumina particles. For instance, those spherical α-alumina particles prepared directly by using γ-alumina as an intermediate product and those spherical particles prepared by pulverizing fine sintered products of α-alumina and re-sintering them can be used preferably. It is necessary in this invention to always use spherical α-alumina particles since the use of non-spherical α-alumina in the coating composition may significantly reduce the abrasion resistance of the resulting coating films.

The spherical α-alumina particles are contained in an amount of from 35 to 85% by weight and, preferably, from 50 to 80% by weight of the solid content in the coating composition. If said amount is less than 35% by weight, the abrasion resistance and the scratch resistance are extremely reduced. While on the other hand, if said amount exceeds 85% by weight, the coating processability is decreased and the adherence to each of the substrates is undesirably reduced.

Referring then to the particle size of the spherical α-alumina particles employed, an average particle size within a range between 5—50 μm and, preferably, 5—30 μm provides the most excellent abrasion resistance. If the particle size exceeds 50 μm, the particles are liable to be caught and detached from the resin layer by the effect of the acting frictional member in the course of the sliding movement. On the other

2

hand, if the average particle size is less than 5 μm, the α-alumina particles tend to behave together with the binder such that the properties of the binder become significant tending to eliminate the effect of the spherical α-alumina particles.

The bis-phenol A type epoxy resin having an epoxy equivalent of 450 or more which, together with a curing agent, is usable as a binder in this invention may be a commerically available one. If the epoxy equivalent is less than 450, the adherence to each of the substrates is particularly reduced. In addition, the abrasion resistance and the scratch resistance of the resulting coating film are significantly reduced.

Another resin which, together with a curing agent, is usable as a binder in this invention is an acrylic resin having a glass transition temperature of 30°C or higher and a hydroxyl value of from 20 to 120 (hereinafter called hydroxyl radical containing acrylic resin). If the glass transition temperature of the acrylic resin is less than 30°C, the abrasion resistance, and the scratch resistance of the obtained coating film are significantly reduced, and the stain resistance and weatherability are also reduced. Further, if the hydroxyl value of the acrylic resin is less than 20, the solvent resistance, surface hardness and the abrasion resistance of the obtained coating film are reduced. While on the other hand, if the hydroxyl value of the acrylic resin exceeds 120, the processability for the coating, the adherence and the weatherability are reduced.

The hydroxyl radical containing acrylic resin is prepared by polymerizing a monomer mixture comprising as an essential component a hydroxyl radical containing (meth)acrylate, for example, 2-hydroxyethyl (meth)acrylate, 2-hydroxypropyl (meth)acrylate and (meth)acrylic acid alkyl ester and, optionally, other vinyl monomer copolymerizable with the above-mentioned hydroxyl radical containing acrylic monomer, for example, methacrylic acid, acrylic acid, styrene, vinyl toluene, vinyl acetate, vinyl propionate and acrylonitrile, in the usual manner.

There is no particular restriction for the curing agent used in combination with the bisphenol A type epoxy resin or the hydroxy radical containing acrylic resin as described above, and the curing agent can properly be selected from known curing agents. They can include, for example, amino resins represented by methyl etherified melamine resin, butyl etherified melamine resin, butyl etherified benzoguanamine resin and butyl etherified urea resin; polyisocyanate compounds or resins having at least two isocyanate groups in one molecule; compounds or resins having at least two acid anhydride groups in one molecule; and silicone resin having at least two alkoxy silane groups in one molecule. Among all, amino resins and polyisocyanate compounds or resins provide a significant effect as the curing agent for the abrasion resistant coating for metal and FRP or plastics used in electrical and electronic applications. By properly determining the blending amount of the curing agent in view of the amount of the reactive groups for curing depending on the combination of the binder resin and the curing agent, the properties of the coating film can optionally be controlled. Usually, the curing agent is blended in such a ratio that the amount of the reactive groups in the curing agent is equivalent or less to the amount of the reactive groups in the epoxy resin or the hydroxyl radical containing acrylic resin.

Thermoplastic acrylic resins having a glass transition temperature of 40°C or higher and a weight average molecular weight of 30,000 or greater are also usable as the binder in this invention. The thermoplastic acrylic resin is produced by polymerizing a monomer mixture comprising a methacrylic acid alkyl ester and/or acrylic acid alkyl ester as the essential ingredient and one or more of other vinyl monomers copolymerizable with the (meth)acrylic acid alkyl ester, for example, styrene, vinyl toluene, vinyl acetate, (meth)acrylic acid, itaconic acid, 2-hydroxy ethyl (meth)acrylate, 2-hydroxyl propyl (meth)acrylate in a usual manner by using a radical polymerization initiation catalyst. If the glass transition temperature of the thermoplastic acrylic resin is lower than 40°C, not only the abrasion resistance and the scratch resistance of the thus obtained coating film are significantly reduced, but also the stain resistance and weatherability are impaired. While on the other hand, if a thermoplastic acrylic resin having a molecular weight of less than 30,000 is used, the physical strength of the obtained coating film is significantly reduced undesirably.

There is no particular restriction for the organic solvents used in this invention so long as the coated substrates are not degraded by the solvent. For instance, they include hydrocarbons such as toluene and xylene; esters such as ethyl acetate and butyl acetate; ketones such as methyl ethyl ketone and methyl isobutyl ketone and alcohols such as ethanol, isobutanol and n-butanol.

In using the coating composition according to this invention, the binder, spherical α-alumina particles, organic solvent and, is required, the curing agent as described above are blended each in a predetermined amount by a usual manner, coated e.g. by means of spray coating, or roll coater coating and then dried to obtain a strong coating film.

Upon blending the composition, additives, dyes, pigments or other materials usually employed may be added within such a range as not impairing the effect of this invention.

Examples 1—3

As shown in Table 1, bisphenol A type epoxy resins having different epoxy equivalents were dissolved in a mixed solvent of toluene and cellosolve acetate to prepare epoxy resin solutions. Then, after mixing to dissolve Yuban® 22R (registered trade mark; manufactured by Mitsui Toatsu Kagaku K.K.), which is a butyl etherified melamine resin, into each of the epoxy resin solutions in a solid ratio of epoxy resin/melamine resin=60/40 (weight ratio), spherical α-alumina particles of 10 μm average particle size were added in an amount of 70% by weight of the solid content and stirred at a high speed to obtain coating compositions (I), (II) and (III).

Each of the thus obtained coating compositions was coated on a PBT resin moulded product reinforced with 10% carbon fiber (manufactured by Mitsubishi Rayon K.K.) in a thickness of 40 µm and then baked at 130°C for 40 min. Evaluations of the performance of the coating films on the coated articles obtained by this method are shown in Table 1. As the result, it can be seen that the coating compositions according to this invention provide very good abrasion resistance and scratch resistance values.

TABLE 1

| Coating composition | (I) | (II) | (III) | (IV) (Comparative) |
|---|---|---|---|---|
| Epoxy equivalent of epoxy resin | 470 | 920 | 2700 | 350 |
| αalumina content (% by weight) | 50 | 70 | 80 | 70 |
| Pencil hardness | 8H | more than 9H | more than 9H | 3H |
| Abrasion resistance (mg) (note 1) | 70 | 65 | 60 | 130 |
| Adherence (note 2) | 100 | 100 | 95 | 60 |
| Scractch resistance (note 3) | no abnormality | no abnormality | no abnormality | slightly scratched |

(note 1):

A taper type rotational abrasion tester and CS-17 as a frictional member were used and the abrasion resistance was determined as the amount abraded after the tester was rotated for 2000 cycles under a speed of 1000 cycles per min and 1000 g of load.

(note 2):

Cured film was scratched with a cutter knife at 2 mm intervals to make 100 rectangular areas, and a tacky polyester tape was bonded to and thereafter peeled from, the surface. The adherence is indicated by the number of the rectangular areas remaining on the coated plate.

(note 3):

The scratch resistance is defined based on the state of the coated surface when rubbed 10 times with steel wool.

Comparative Example 1

For comparison, a paint was formulated under quite similar conditions as in Example 1 except for using an epoxy resin having an epoxy equivalent of 350 as shown in Table 1 to obtain a coating composition (IV). A coated plate was prepared by using the coating composition (IV) under the same conditions as those in Example 1 and the performance evaluation was carried out. The result is shown in Table 1.

Examples 4—6

Monomer compositions as shown in Table 2 were polymerized by using azobisisobutyronitrile as the polymerization initiator at 80°C to obtain toluene solutions of acrylic resins having different glass transition temperatures and hydroxyl values. After adding Takenate D-110N (manufactured by Takeda Yakuhin Kogyo K.K.), which is a polyisocyanate compound, into each of the acrylic resin solutions such that the polyisocyanate was equivalent to the hydroxy equivalent in the acrylic resins, spherical α-alumina particles of 10 µm average particle size were added in an amount of 50%, 70% and 80% by weight of the solid content and stirred at a high speed to obtain coating compositions (V), (VI) and (VII) respectively.

Each of the coating compositions thus obtained was spray-coated on a sand blasted steel plate to a thickness of 30 µm and dried at 60°C for 60 min. The results of the performance evaluation for the coating films of the thus coated plate obtained in this manner are shown in Table 2. It can be seen from the result, that the abrasion resistant coating compositions according to this invention provide very good abrasion resistance and scratch resistance values.

TABLE 2

| | Example | | | Comparative Example | |
|---|---|---|---|---|---|
| | 4 | 5 | 6 | 2 | 3 |
| Coating composition | (V) | (VI) | (VII) | (VIII) | (IX) |
| Monomer composition for polymerization (% by weight) | | | | | |
| Methyl methacrylate | 30 | 25 | 25 | — | 30 |
| Styrene | 30 | 30 | 25 | — | 30 |
| Butyl methacrylate | 30 | 30 | 30 | 80 | 36 |
| 2-hydroxylethyl methacrylate | 10 | 15 | 20 | 20 | 4 |
| Property of acrylic resin Glass transition temperature (°C) | 70 | 66 | 64 | 27 | 66 |
| Hydroxyl value | 43 | 64 | 86 | 86 | 17 |
| α-alumina content (% by weight) | 50 | 70 | 80 | 80 | 70 |
| Abrasion resistance (mg) (1) | 80 | 70 | 82 | 115 | 120 |
| Adherence (2) | 100 | 100 | 95 | 100 | 100 |
| Scratch resistance (3) | no abnormality | '' | '' | Slightly scratched | '' |
| Pencil hardness | 8H | more than 9H | more than 9H | 3H | 3H |

Note (1)—(3): same as in Table 1.

Comparative Examples 2 and 3

For the comparison, paints were prepared under quite similar conditions as in Example 4 except for using acrylic resins having different glass transition temperature and hydroxyl values as shown in Table 2 to prepare coating compositions (VIII) and (IX). Coated plates were prepared under the same conditions as those in Example 4 using these coating compositions and the performance evaluation was carried out. The results are shown in Table 2.

Example 7

Spherical α-alumina particles of 10 μm average particle size were added in an amount of 65% by weight of the solid content into an acrylic solution prepared by polymerizing 99 parts of methyl methacrylate, one part of acrylic acid and 150 parts of toluene (thermoplastic acrylic resin having a glass transition temperature of 105°C and a weight average molecular weight of 70,000) and stirred at a high speed to obtain a coating compostiion (X).

The thus obtained coating composition (X) was diluted with a thinner (20% by weight of toluene, 40% by weight of butanol and 40% by weight of methyl ethyl ketone), and was spray coated on an ABS resin plate to a thickness of 30 μm and then dried at 50°C for 50 min. The results for the performance evaluation of the coating film on the plate obtained in this way are shown in Table 3. From the results, it can be seen that the coating composition according to this invention provides very good abrasion resistance and scratched resistance values.

Comparative Example 4

A coating composition (XI) was obtained by the same procedures as in Example 7 except for using a 40% by weight of toluene solution of n-butylmethacrylate polymer having a weight average molecular weight of 75,000 and a glass transition temperature of 20°C, which was coated on an ABS resin plate. The result for the performance evaluation of the coated film on the resin plate are shown in Table 3.

# EP 0 172 567 B1

## Comparative Example 5

A coating composition (XII) was obtained in the same procedures as in Example 7 except for using an acrylic resin having a weight average molecular weight reduced to 25,000, which was coated on an ABS resin plate. The results for the performance evaluation for the coated film on the resin plate are shown in Table 3.

### TABLE 3

| | Example | Comparative Example | |
|---|---|---|---|
| | 7 | 4 | 5 |
| Coating composition | (X) | (XI) | (XII) |
| Acrylic resin, glass transition temperature (°C) | 105 | 20 | 105 |
| Acrylic resin, average molecular weight | 70,000 | 75,000 | 25,000 |
| Pencil hardness | 7H | H | 5H |
| Abrasion resistance (mg) (1) | 85 | 185 | 169 |
| Adherence (2) | 100 | 100 | 90 |
| Scratch resistance (3) | no abnormality | entirely injured | '' |

Notes (1)—(3): same as in Table 1.

## Example 8 and Comparative Examples 6 and 7

Spherical α-alumina particles of 10 μm average particle size were added to the acrylic resin solution obtained in Example 7 in an amount of 50% by weight (Example 8), 33% by weight (Comparative Example 6) and 87% by weight (Comparative Example 7) respectively of the solid content and stirred at a high speed to obtain coating compositions (XIII), (XIV) and (XV). Each of the coating compositions (XIII)—(XV) thus obtained was coated on an ABS resin plate and dried by the same procedures as in Example 7. The results for the performance evaluation for the coated films on the plates are shown in Table 4. The results for the coating composition of Example 7 are also shown in Table 4.

### TABLE 4

| | Example | | Comparative Example | |
|---|---|---|---|---|
| | 7 | 8 | 6 | 7 |
| Coating composition | (I) | (XIII) | (XIV) | (XV) |
| α-alumina content (%) | 65 | 50 | 33 | 87 |
| Pencil hardness (1) | 7H | 6H | 2H | 7H |
| Abrasion resistance (mg) (2) | 85 | 97 | 190 | 160 |
| Adherence (3) | 100 | 100 | 100 | 75 |
| Scratch resistance | no abnormality | no abnormality | slightly injured | no abnormality |

Notes (1)—(3): same as in Table 1.

## Claims

1. A coating composition excellent in abrasion resistance comprising spherical α-alumina particles, a binder and an organic solvent, in which said spherical α-alumina particles have an average particle size within a range between 5 and 50 μm, characterized in that the spherical α-alumina particles are contained in an amount of from 35 to 85% by weight of the solid content in the coating composition and the binder

6

comprises a bisphenol A type epoxy resin having an epoxy equivalent of 450 or more and a curing agent or an acrylic resin having a glass transition temperature of 30°C or higher and a hydroxyl value of from 20 to 120 and a curing agent.

2. The coating composition excellent in abrasion resistance as defined in claim 1, characterized in that the curing agent is a polyisocyanate compound.

3. The coating composition excellent in abrasion resistance as defined in claim 1, characterized in that the curing agent is an amino resin.

4. The coating composition excellent in abrasion resistance as defined in claim 1, characterized in that the binder comprises a thermoplastic acrylic resin having a glass transition temperature of 40°C or higher and a weight average molecular weight of 30,000 or greater.

**Patentansprüche**

1. Beschichtungsmasse mit ausgezeichneter Abriebfestigkeit, die sphärische α-Aluminiumoxid-Teilchen, ein Bindemittel und ein organisches Lösungsmittel enthält und in der die sphärischen α-Aluminiumoxid-Teilchen eine mittlere Teilchengröße in einem Bereich zwischen 5 und 50 μm haben, dadurch gekennzeichnet, daß die sphärischen α-Aluminiumoxid-Teilchen in einer auf den Feststoffgehalt in der Beschichtungsmasse bezogenen Menge von 35 bis 85 Masse% enthalten sind und daß das Bindemittel aus einem Epoxyharz vom Bisphenol-A-Typ mit einem Epoxyäquivalent von 450 oder mehr und einem Härtungsmittel oder aus einem Acrylharz mit einer Glasumwandlungstemperatur von 30°C oder höher und einer Hydroxylzahl von 20 bis 120 und einem Härtungsmittel besteht.

2. Beschichtungsmasse mit ausgezeichneter Abriebfestigkeit nach Anspruch 1, dadurch gekennzeichnet, daß das Härtungsmittel eine Polyisocyanatverbindung ist.

3. Beschichtungsmasse mit ausgezeichneter Abriefestigkeit nach Anspruch 1, dadurch gekennzeichnet, daß das Härtungsmittel ein Aminharz ist.

4. Beschichtungsmasse mit ausgezeichneter Abriebfestigkeit nach Anspruch 1, dadurch gekennzeichnet, daß das Bindemittel aus einem thermoplastischen Acrylharz mit einer Glasumwandlungstemperatur von 40°C oder höher und einem Durchschnittsmolekulargewicht (Massemittel) von 30.000 oder größer besteht.

**Revendications**

1. Une composition de revêtement ayant une excellente résistance à l'abrasion contenant des particules sphériques d'alumine α, un liant et un solvant organique, dans laquelle lesdites particules sphériques d'alumine α ont une dimension moyenne de particules dans une gamme entre 5 et 50 μm, caractérisée en ce que les particules sphériques d'alumine α sont contenues dans une proportion de 35 à 85% en poids de la teneur en solides dans la composition de revêtement et le liant comprend une résine époxy du type bisphénol A ayant un équivalent d'époxyde de 450 ou plus et un agent durcissant ou une résine acrylique ayant une température de transition vitreuse de 30°C ou plus et un indice d'hydroxyle de 20 à 120 et un agent durcissant.

2. La composition de revêtement ayant une excellente résistance à l'abrasion définie à la revendication 1, caractérisée en ce que l'agent durcissant est un polyisocyanate.

3. La composition de revêtement ayant une excellente résistance à l'abrasion définie à la revendication 1, caractérisée en ce que l'agent durcissant est une résine aminoplaste.

4. La composition de revêtement ayant une excellente résistance à l'abrasion définie à la revendication 1, caractérisée en ce que le liant comprend une résine acrylique thermoplastique ayant une température de transition vitreuse de 40°C ou plus et un poids moléculaire moyen en poids de 30 000 ou plus.